(19)

Europäisches
Patentamt
European
Patent Office
Office européen
des brevets

(11)    **EP 1 863 243 A1**

(12)    **EUROPEAN PATENT APPLICATION**

(43) Date of publication:
    **05.12.2007   Bulletin 2007/49**

(51) Int Cl.:
    **H04L 25/02** (2006.01)

(21) Application number: **07251555.4**

(22) Date of filing: **11.04.2007**

| | |
|---|---|
| (84) Designated Contracting States:<br>**AT BE BG CH CY CZ DE DK EE ES FI FR GB GR HU IE IS IT LI LT LU LV MC MT NL PL PT RO SE SI SK TR**<br>Designated Extension States:<br>**AL BA HR MK YU** | (72) Inventors:<br>• **Lillie, Andrew George**<br>  **Bristol BS1 4ND (GB)**<br>• **McNamara, Darren Philip**<br>  **Bristol BS1 4ND (GB)**<br>• **Sandell, Magnus Stig Torsten**<br>  **Bristol BS1 4ND (GB)** |
| (30) Priority: **01.06.2006   GB 0610847** | (74) Representative: **Round, Edward Mark**<br>**Marks & Clerk** |
| (71) Applicant: **KABUSHIKI KAISHA TOSHIBA**<br>**Tokyo 105-8001 (JP)** | **90 Long Acre**<br>**London WC2E 9RA (GB)** |

(54)    **Wireless communication apparatus**

(57)      This invention relates to methods, apparatus, and processor control code for signal detection in Multiple Input Multiple Output Orthogonal Frequency Division Multiplexed (MIMO-OFDM) communications systems.

A method for determining outputs from a received signal in a lattice-reduction-aided receiver based multi-carrier wireless communications system having a plurality of sub-carriers divided into a plurality of sets of sub-carriers, the method comprising performing a detection method for each of said sets, the detection method comprising the step of applying lattice reduction to said set of sub-carriers thereby generating a reduced basis channel response.

Fig. 4

## Description

Field of Invention

This invention relates to methods, apparatus, and processor control code for signal detection in Multiple Input Multiple Output (MIMO) communications systems. More particularly, it relates to signal detection in MIMO Orthogonal Frequency Division Multiplexed (MIMO-OFDM) communications systems.

Background of the Invention

Conventional communication systems can be represented mathematically as:

$$\mathbf{y} = \mathbf{H}\mathbf{x} + \mathbf{v}$$

in which, for a MIMO communication system, $\mathbf{y}$ is an $n$-by-1 vector representing the received signal, $\mathbf{H}$ is an $n$-by-$m$, channel matrix modelling the transmission characteristics of the communications channel, $\mathbf{x}$ is an $m$-by-1 vector representing transmit symbols, $\mathbf{v}$ is an $n$-by-1 noise vector and wherein $m$ and $n$ denote the number of transmit and receive antennas respectively.

Recent publications have demonstrated how the use of a technique called Lattice Reduction can improve the performance of MIMO detection methods.

For example, "Lattice-Reduction-Aided Detectors for MIMO Communication Systems", (H. Yao and G.W. Womell, Proc. IEEE Globecom, Nov 2002, pp. 424-428) describes Lattice-reduction (LR) techniques for enhancing the performance of multiple-input multiple-output (MIMO) digital communication systems.

In addition, "MMSE-Based Lattice-Reduction for Near-ML Deetection of MIMO Systems", (D. Wubben, R. Bohnke, V. Kuhn and K. Kammeyer, in *Proc. ITG* Workshop on Smart Antennas, Jul 2004, pp. 106-113, hereinafter referred to as "Wubben et al.") adopts the lattice-reduction aided schemes to the MMSE criterion.

"From lattice-reduction-aided detection towards maximum-likelihood detection in MIMO systems", (C. Windpassinger, L.H.-J. Lampe and R.F.H. Fischer, in Wireless and Optical Communications, WOC 2003) extends the lattice-reduction-aided detection scheme described in Wubben et al. with the use of the well-known LLL algorithm, which enables the application to MIMO systems with arbitrary numbers of dimensions.

Furthermore, "Lattice reduction aided pre-coding", (C. Windpassinger, R.F.H. Fischer and J.B. Huber, in IEEE Transactions on Communications, Dec 2004, vol. 52, issue 12. pp. 2057-2060) shows the use of lattice reduction applied to MIMO pre-coding.

The techniques used in the publications described above use the concept that mathematically, the columns of the channel matrix, **H,** can be viewed as describing the basis of a lattice. An equivalent description of this lattice (a so-called 'reduced basis') can therefore be calculated so that the basis vectors are close to orthogonal. The MIMO receiver, or pre-coder, can employ this reduced basis to equalize the channel, yielding a significant performance advantage over a non-lattice aided linear detector or pre-coder.

Orthogonal Frequency Division Multiplexing (OFDM) is a well-known technique for transmitting high bit rate digital data signals. Rather than modulate a single carrier with the high speed data, the data is divided into a number of lower data rate channels each of which is transmitted on a separate subcarrier. MIMO-OFDM based systems are likely to form the core of future wireless communication standards, for example the IEEE 802.11n WLAN standard.

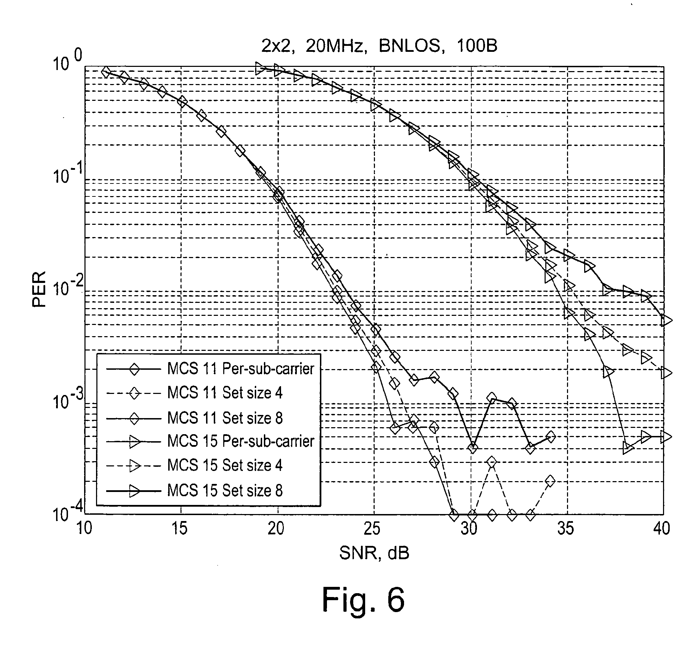

For example, "Lattice-Reduction-Aided Receivers for MIMO-OFDM in Spatial Multiplexing Systems" (I. Berenguer, J. Adeane, I. Wassell and X. Wang, in Proc. Int. Symp. on Personal Indoor and Mobile Radio Communications, Sept 2004, pp. 1517-1521, hereinafter referred to as "Berenguer et al.") describes that Lattice-reduction techniques can be applied to MIMO-OFDM based systems and can yield a significant performance advantage over other reduced complexity detection techniques (such as, as illustrated in Figures 6 to 9 in Berenguer et al.).

"Improved detection methods for MIMO-OFDM-CDM communication systems" (J. Adeane, M.R.D. Rodrigues, I. Berenguer, and I.J. Wassell, in Proc. IEEE Vehicular Technology Conference (VTC 2004), Sep 2004, pp. 1604-1608, hereinafter referred to as "Adeane et al.") applies MIMO detection methods based on lattice reduction, partial decision feedback (PDF), and BLAST ordering techniques to MIMO-OFDM-CDM systems.

Berenguer et al. and Adeane et al. employ the most common lattice reduction algorithm, the Lenstra-Lenstra-Lovasz (LLL) algorithm disclosed in "Factoring Polynomials with Rational Coefficients", (A. Lenstra, H. Lenstra and L. Lovasz, Math Ann., Vol. 261, pp. 515-534, 1982, hereinafter referred to as "Lenstra et al."), on a per-sub-carrier basis. However, none of the above literature discusses the principle of applying the LLL algorithm, or any other lattice reduction algorithm, to groups of sub-carriers.

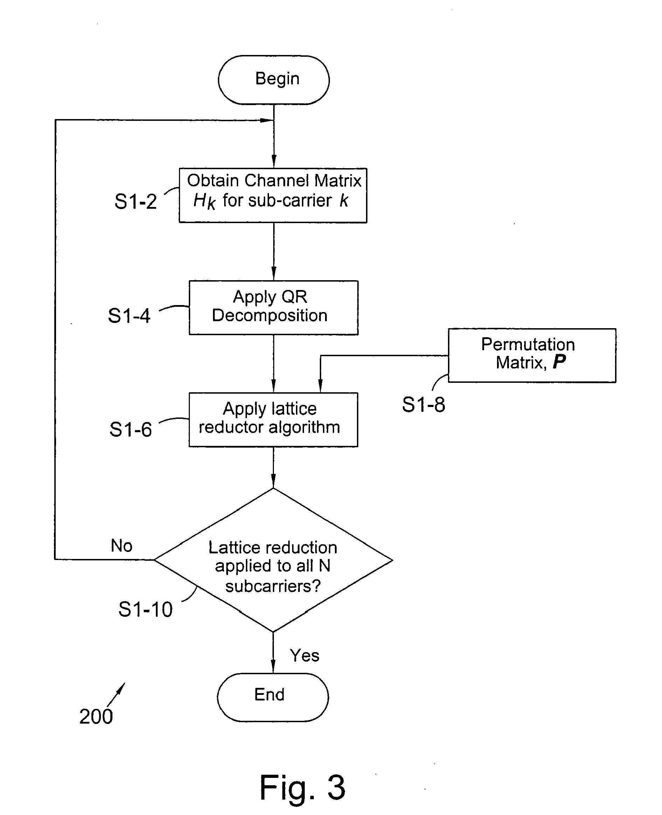

A MIMO detector which employs lattice reduction on a per-sub-carrier basis 200 is shown in Figure 3. In Step S1-2 in Figure 3, the channel matrix, $\mathbf{H}_k$, for sub-carrier $k$, is obtained.

According to Step S1-4, the channel matrix, $\mathbf{H}_k$, for sub-carrier $k$, is decomposed into:

$$\mathbf{H}_k = \mathbf{Q}_k \mathbf{R}_k$$

using a standard QR decomposition, or any of its sorted variants. The LLL algorithm, or more generally, any suitable lattice reduction algorithm S1-6, can then be applied to $Q_k$ and $R_k$:

$$[\,T_k, \overline{Q}_k, \overline{R}_k\,] = LLL(Q_k, R_k, P)$$

where, $P$ is a permutation matrix S1-8, which in this configuration is normally initialised to be an identity matrix with the same dimensions as $H$. The LLL algorithm produces:

$$H_k T_k = \widetilde{Q}_k \widetilde{R}_k$$

which describes the reduced lattice for sub-carrier $k$. This process is repeated for all N sub-carriers independently S1-10. As shown in Figure 3, this per-sub-carrier lattice reduction process, which requires a QR decomposition S1-4 and lattice reduction S1-6 per sub-carrier.

It should be noted that the LLL algorithm in its standard form employs an iterative technique, where it is not known a-priori how many iterations it will take before the algorithm converges. This means that the complexity of the algorithm is variable and dependant upon the matrix to be reduced.

The lattice reduction detectors for MIMO-OFDM systems described in the above references all assume that the LLL algorithm (although any other lattice Reduction algorithm could be employed) is applied on a per-sub-carrier basis. This per-sub-carrier lattice reduction represents a significant proportion of the overall detector complexity. Therefore, it is desirable to reduce the complexity of this stage of the detector algorithm.

For example, in Berenguer et al., a MIMO-OFDM system with 16 information-bearing sub-carriers is considered. In that method, the LLL algorithm is applied independently to the channel matrix for each individual sub-carrier, as described above. This process must be undertaken for each OFDM packet received. In future MIMO-OFDM WLAN systems, such as IEEE 802.11n, it is expected that 52 or more information bearing sub-carriers will be employed. In future cellular systems, where this technique is equally applicable, there may be hundreds of active sub-carriers, each of which requires lattice reduction.

Summary of the Invention

There is therefore a need to reduce the complexity of the basis reduction of each sub-carrier channel matrix for a multi-carrier system.

Embodiments of the invention include apparatus and methods for determining outputs from a received signal in a lattice-reduction-aided receiver based multi-carrier wireless communications system.

In a first aspect of the present invention there is provided a method for determining outputs from a received signal in a lattice-reduction-aided receiver based multi-carrier wireless communications system having a plurality of sub-carriers divided into a plurality of sets of sub-carriers, the method comprising performing a detection method for each of said sets, the detection method comprising the step of applying lattice reduction to said set of sub-carriers thereby generating a reduced basis channel response.

In an embodiment of the present invention, said method further comprises the step of determining a single value channel response matrix from a set of channel response matrices.

The step of determining said single value channel response may be performed by any one of:

    i. mean value of said channel response matrices, and;
    ii. median value of said channel response matrices.

In another embodiment of the present invention, said method further comprises the step of processing said single value channel response matrix thereby generating an unitary matrix and a triangular matrix.

The step of processing said single value channel response matrix may be a QR decomposition of said single value channel response matrix.

Preferably, the step of applying said lattice reduction to said plurality of sub-carriers includes the step of applying said lattice reduction to said unitary matrix and said triangular matrix.

In another embodiment of the present invention said method further comprises the step of determining a reduced basis of a sub-carrier in accordance with said reduced basis channel response.

In another embodiment of the present invention, the method further comprises the step of determining a unitary matrix and a triangular matrix for said sub-carrier.

The step of determining an unitary matrix and a triangular matrix for said sub-carrier may be performed by any one of:

    i. A QR decomposition, and;
    ii. An interpolation method.

Preferably, the lattice reduction is in accordance with the LLL algorithm.

Preferably, the LLL algorithm provides the following relationship:

$$[\,\overline{T}, \widetilde{Q}_k, \widetilde{R}_k\,] = LLL(\overline{Q}_k, \overline{R}_k, P)$$

where $P$ is a permutation matrix.

Preferably, said permutation matrix comprises an identity matrix.

In another embodiment of the present invention, said method further comprises the step of applying lattice reduction to said unitary matrix and the relationship of said triangular matrix to said sub-carrier is:

$$[T_k, \widetilde{Q}_k, \widetilde{R}_k] = LLL(\widetilde{Q}_k, \widetilde{R}_k, \overline{T})$$

where $T$ is a permutation matrix.

In a further aspect the invention provides an apparatus for determining outputs from a received signal in a lattice-reduction-aided receiver based multi-carrier wireless communications system having a plurality of sub-carriers divided into a plurality of sets of sub-carriers, the apparatus comprising detection means for performing detection on each of said sets, the detection means comprising means for applying lattice reduction to said sub-carriers in said set thereby generating a reduced basis channel response.

The invention further provides a receiver incorporating an apparatus as described above.

The skilled person will recognise that the above-described apparatus and methods may be implemented using and/or embodied in processor control code. Thus in a further aspect the invention provides such code, for example on a carrier medium such as a disk, CD- or DVD-ROM, programmed memory such as read-only memory (Firmware) or on a data carrier such as an optical or electrical signal carrier. Embodiments of the invention may be implemented on a DSP (Digital Signal Processor), ASIC (Application Specific Integrated Circuit) or FPGA (Field Programmable Gate Array). Thus the code may comprise conventional program code, or micro-code, or, for example, code for setting up or controlling an ASIC or FPGA. In some embodiments the code may comprise code for a hardware description language such as Verilog (Trade Mark), VHDL (Very high speed integrated circuit Hardware Description Language), or SystemC. As the skilled person will appreciate, processor control code for embodiments of the invention may be distributed between a plurality of coupled components in communication with one another.

Brief description of the Drawings

Figure 1 illustrates schematically a MIMO system including a transmitter and a receiver;

Figure 2 illustrates in further detail the receiver of figure 1;

Figure 3 illustrates a conventional per-sub-carrier lattice reduction process;

Figure 4 illustrates a cooperative basis reduction process for multi-carrier communications systems in accordance with a first embodiment of the present invention;

Figure 5 illustrates a group basis reduction process for multi-carrier communications systems in accordance with a second embodiment of the present invention;

Figure 6 illustrates the performance of the basis sub-carrier grouping method in comparison with the per-sub-carrier method in accordance with an embodiment of the present invention.

Detailed Description

The present invention will be described in further detail on the basis of the attached diagram.

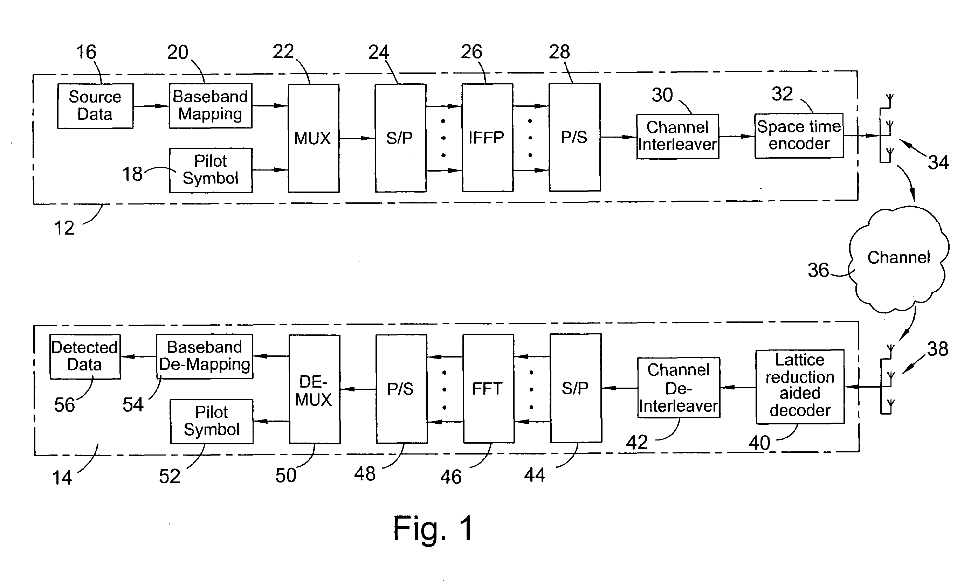

Figure 1 illustrates such a system, comprising a MIMO data communications system 10 of generally known construction. New components, in accordance with a specific embodiment of the invention, will be evident from the following description.

The communications system 10 comprises a transmitter device 12 and a receiver device 14. It will be appreciated that, in many circumstances, a wireless communications device will be provided with the facilities of a transmitter and a receiver in combination but, for this example, the devices have been illustrated as one way communications devices for reasons of simplicity.

The transmitter device 12 comprises a data source 16, which provides data (comprising information bits) to a baseband mapping unit 20, which optionally provides forward error correction coding, channel interleaving and which outputs modulated symbols. The modulated symbols are provided to a multiplexer 22 which combines them with pilot symbols from a pilot symbol generator 18, which provides reference amplitudes and phases for frequency synchronisation and coherent detection in the receiver and known (pilot and preamble) data for channel estimation. The multiplexed symbols are provided to a parser 24, which creates a plurality of parallel spatial streams. The combination of blocks 26, 28 and 30 convert the serial spatial data stream from parser 24 to a plurality of parallel, reduced data rate streams, performs an IFFT on these data streams to provide an OFDM symbol, and then converts the multiple subcarriers of this OFDM symbol to a single serial data stream. Processes 26, 28 and 30 are performed in parallel for each spatial stream. The space-time encoder 32 encodes an incoming symbol or symbols as a plurality of code symbols for simultaneous transmission from a transmitter antenna array 34 comprising a plurality of transmit antennas. In this illustrated example, two transmit antennas are provided, though practical implementations may include more antennas depending on the application.

The encoded transmitted signals propagate through a MIMO channel 36 defined between the transmit antenna array 34 and a corresponding receive antenna array 38 of the receiver device 14. The receive antenna array 38 comprises a plurality of receive antennas which provide a plurality of inputs to a parallel bank of blocks 40, 42 and 44 which perform a serial-to-parallel conversion, FFT, and parallel-to-serial re-conversion independently for each received stream, providing an output to the lattice-reduction-aided decoder 46. In this specific embodiment, the receive antenna array 38 comprises two receive antennas.

The lattice-reduction-aided decoder 46 has the task of removing the effect of the MIMO channel 36. The output of the lattice-reduction-aided decoder 46 comprises a plurality of signal streams, one for each transmit antenna, each carrying so-called soft or likelihood data on the probability of a transmitted bit having a particular value. This data is provided to a de-parser 48 which reverses the effect of the parser 24, and the de-parsed bits output by this de-parser 48 are then presented to a de-multiplexer 50 which separates the pilot symbol signal 54 from the data symbols. The data symbols are then demodulated and de-mapped by base-band de-mapping unit 52 to provide a detected data output 56. Broadly speaking the receiver 14 is a mirror image of the transmitter 12. The transmitter and receiver may be combined to form an OFDM transceiver.

The specific function of the lattice-reduction-aided decoder 46 will be described in due course.

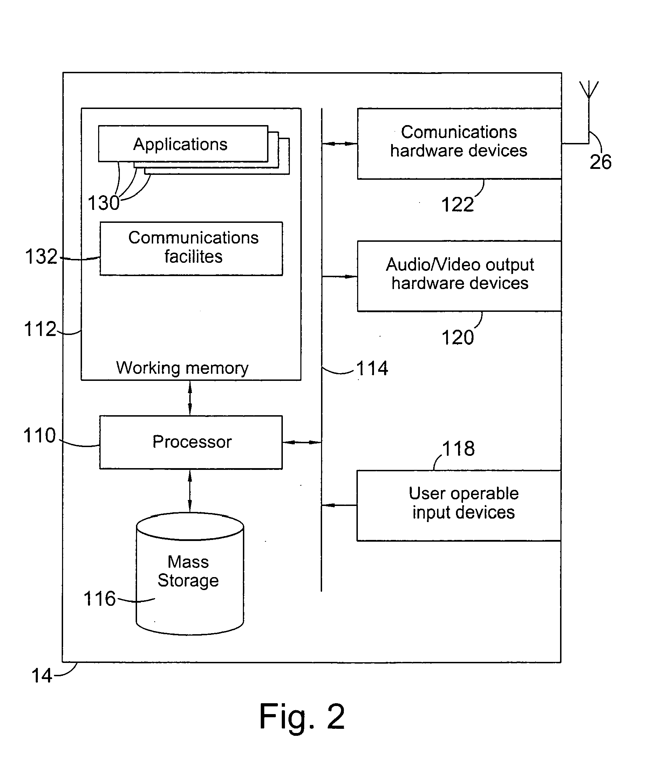

Figure 2 illustrates schematically hardware operably configured (by means of software or application specific hardware components) as the receiver device 14. The receiver device 14 comprises a processor 110 operable to execute machine code instructions stored in a working memory 112 and/or retrievable from a mass storage device 116. By means of a general purpose bus 114, user operable input devices 118 are capable of communication with the processor 110. The user operable input devices 118 comprise, in this example, a keyboard and a mouse though it will be appreciated that any other input devices could also or alternatively be provided, such as another type of pointing device, a writing tablet, speech recognition means, or any other means by which a user input action can be interpreted and converted into data signals.

An alternative implementation could also include a transceiver without predefined user interface.

Audio/video output hardware devices 120 are further connected to the general purpose bus 114, for the output of information to a user. Audio/video output hardware devices 120 can include a visual display unit, a speaker or any other device capable of presenting information to a user.

Communications hardware devices 122, connected to the general purpose bus 114, are connected to the receive antennas 26. In the illustrated embodiment in Figure 2, the working memory 112 stores user applications 130 which, when executed by the processor 110, cause the establishment of a user interface to enable communication of data to and from a user. The applications in this embodiment establish general purpose or specific computer implemented utilities that might habitually be used by a user.

Communications facilities 132 in accordance with the specific embodiment are also stored in the working memory 112, for establishing a communications protocol to enable data generated in the execution of one of the applications 130 to be processed and then passed to the communications hardware devices 122 for transmission and communication with another communications device. It will be understood that the software defining the applications 130 and the communications facilities 132 may be partly stored in the working memory 112 and the mass storage device 116, for convenience. A memory manager could optionally be provided to enable this to be managed effectively, to take account of the possible different speeds of access to data stored in the working memory 112 and the mass storage device 116.

On execution by the processor 110 of processor executable instructions corresponding with the communications facilities 132, the processor 110 is operable to establish communication with another device in accordance with a recognised communications protocol.

In the present embodiment, prior to the processing stage, it is assumed that the sub-carriers have been grouped into sets. These sets need not be of uniform size. The size of the sets will be a function of the frequency selectivity of the channel, i.e. in the case where the channel has low frequency selectivity, adjacent sub-carriers are highly correlated and therefore large sets may be employed. At the other extreme, where a highly frequency selective channel is encountered, the sets may contain only a small number of sub-carriers. The allocation of sub-carriers to sets may be accomplished dynamically depending upon the channel conditions, or it may be fixed.

The manner in which this grouping is achieved is immaterial: any appropriate sub-carrier grouping technique may have been used.

In the following description, without loss of generality, K sub-carriers are allocated to each set. Basis reduction is described for a single set with the method being repeated identically for the remaining sets.

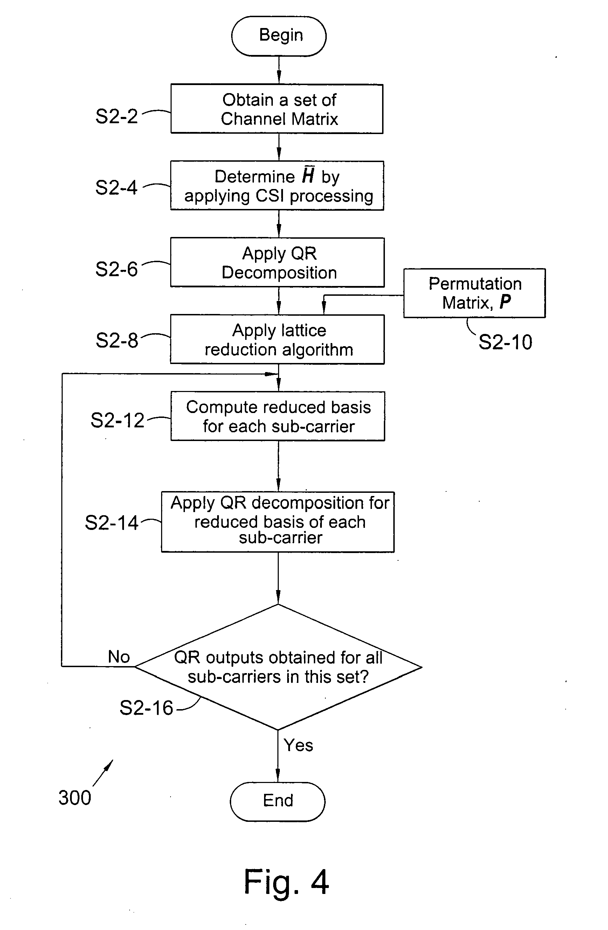

Referring to Figure 4, the following 5 stages are performed on a per-set basis:

> 1. Firstly, in step S2-2, the process is initialised for a set derived from the channel matrix. As noted in step S2-4 in Figure 4, and referred to as "CSI processing" a single value, $\overline{H}$, is computed to be input to the lattice reduction algorithm from the set of $H_k$. It is possible to employ a number of different metrics to achieve this. In this embodiment the mean value is derived as follows:

$$\overline{H} = \frac{1}{K} \sum_{k=0}^{K-1} H_k$$

Other metrics, such as the modal or median value, or one of the individual $H_k$ could be employed as the basis of $\overline{H}$.

2. As identified in step S2-6, QR, or sorted QR, decomposition is applied to the matrix $\overline{H}$ to yield $\overline{Q}$ and $\overline{R}$.

3. Basis reduction is applied using the LLL algorithm S2-8 applied to $\overline{Q}$ and $\overline{R}$. This step also calls upon initialisation, in step S2-10, of a permutation matrix $P$ such that it is a suitably dimensioned identity matrix in this method. The LLL function will yield $\overline{T}$, $\tilde{Q}$ and $\tilde{R}$R for the average channel transfer function, so that $\overline{H}\ \overline{T} = QR$.
It will be appreciated that any other suitable basis reduction algorithm could be used instead.

4. The reduced basis for each sub-carrier $H_k\ \overline{T}$ is computed in step S2-12.

5. Finally, in step S2-14, the reduced basis for each sub-carrier (QR, or sorted QR) is decomposed to yield $Q_k$ and $R_k$. It is possible that an interpolation technique may be employed in this stage, rather than explicitly computing each QR decomposition on a per-sub-carner basis.

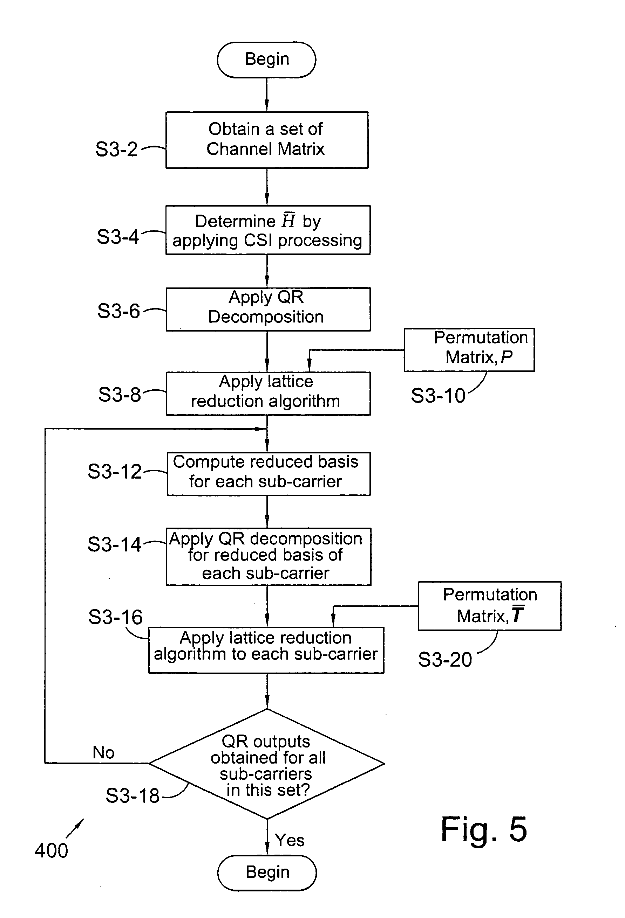

Steps S-12 and S-14 are repeated for each sub-carrier in a set, as indicated with regard to step S2-16.
The method therefore yields the outputs $Q_k$ and $R_k$ on a per-sub-carrier basis and $\overline{T}$ which is common to the set of sub-carriers. These outputs can be employed in the subsequent stages of a lattice reduction aided detector (or pre-coder) in the same way as the outputs of a per-sub-carrier lattice reduction method. This method is therefore sub-optimal, in that a common $\overline{T}$ is employed for the set whereas in the per-sub-carrier processing algorithm an optimal $T_k$ is obtained per-sub-carrier.
The complexity reduction of this method stems from the fact that there is only a single LLL function and K+1 QR decompositions per K grouped sub-carriers, whereas in the per-sub-carrier case, K LLL functions and K QR decompositions are required. For this to yield a significant complexity reduction, the QR decomposition must have significantly lower complexity than the LLL reduction, as the number of QR decompositions required is increased by 1 per set. The complexity of the LLL reduction is variable, but in general, the LLL reduction will have greater complexity than the QR decomposition.
A further embodiment of the invention will now be described with reference to Figure 5, in which steps S3-2 to S3-12 correspond directly to steps S2-2 to S2-12 as previously described. The described method offers additional complexity saving, using additional lattice reduction stages S3-16 (employing a permutation matrix $\overline{T}$ determined in step S3-20) after the per-sub-carrier QR decompositions S3-14 in the grouped method. The purpose of these additional lattice reduction stages is to refine the common $\overline{T}$, produced by the grouped technique, into per-sub-carrier (or smaller set) basis reductions. An individual basis reduction can be obtained by using the reduction:

$$[T_k, \tilde{Q}_k, \tilde{R}_k] = LLL(\tilde{Q}_k, \tilde{R}_k, \overline{T})$$

It is important to note that the permutation matrix input to the LLL reduction is in this case not initialised to the identity matrix, but is initialised to $\overline{T}$.
This refinement adds additional complexity to the per-sub-carrier method, but will result in a more accurate lattice reduction. Assuming that the common $\overline{T}$ is a good approximation to $T_k$, then the additional complexity involved in the refinement LLL should be minimal.
Figure 6 shows the performance of the basic sub-carrier grouping technique in comparison with the per-sub-carrier method. Results are for an 802.11n MIMO-OFDM system, over a channel with limited delay-spread (and therefore frequency-selectivity). This channel is a good model for common indoor operating environments and is therefore representative of a real world scenario. Set sizes of 4 and 8 sub-carrier groupings are shown for two modulation and coding scheme (MCS) values. These results demonstrate that, for this operating environment, only minimal degradation in performance is observed with grouping sizes that will result in significant complexity reduction. For example, for MCS value of 11, the degradation at a 1% Packet Error Rate (PER) associated with the use of a set size of 8 is only 1 dB compared to per-sub-carrier processing.
The person skilled in the art will appreciate that the description above can also be applied to a MIMO pre-coder.
It will be appreciated that the foregoing provides description of specific embodiments of the invention and that no limitation on the scope of protection sought herein is to be implied therefrom. The scope of protection sought is to be determined from the claims, read with reference to, but not bound by, the description and drawings.

## Claims

1.   A method for determining outputs from a received signal in a lattice-reduction-aided receiver based multi-carrier wireless communications system having a plurality of sub-carriers divided into a plurality of sets of sub-carriers, the method comprising performing a detection method for each of said sets, the detection method comprising the step of applying lattice reduction to said set of sub-carriers thereby generating a reduced basis channel response.

2. A method in accordance with claim 1 further comprising the step of determining a single value channel response matrix from a set of channel response matrices.

3. A method in accordance with claim 2, wherein the step of determining said single value channel response is performed by any one of:

    i. mean value of said channel response matrices, and;
    ii. median value of said channel response matrices.

4. A method in accordance with any preceding claim further comprising the step of processing said single value channel response matrix thereby generating an unitary matrix and a triangular matrix.

5. A method in accordance with claim 4, wherein the step of processing said single value channel response matrix is a QR decomposition of said single value channel response matrix.

6. A method in accordance with claim 4 or claim 5, wherein the step of applying said lattice reduction to said plurality of sub-carriers includes the step of applying said lattice reduction to said unitary matrix and said triangular matrix.

7. A method in accordance with any preceding claim further comprising the step of determining a reduced basis of a sub-carrier in accordance with said reduced basis channel response.

8. A method in accordance with claim 7 further comprising the step of determining an unitary matrix and a triangular matrix for said sub-carrier.

9. A method in accordance with claim 8, wherein the step of determining said unitary matrix and said triangular matrix for said sub-carrier is performed by any one of:

    i. A QR decomposition, and;
    ii. An interpolation method.

10. A method in accordance with any preceding claim, wherein the lattice reduction is in accordance with the LLL algorithm.

11. A method in accordance with any one of claims 7 to 10, further comprising the step of applying lattice reduction to said unitary matrix and said triangular matrix to said sub-carrier has the following relationship:

$$[T_k, \widetilde{Q}_k, \widetilde{R}_k] = LLL(\widetilde{Q}_k, \widetilde{R}_k, \overline{T})$$

where $\overline{T}$ is a permutation matrix.

12. An apparatus for determining outputs from a received signal in a lattice-reduction-aided receiver based multi-carrier wireless communications system having a plurality of sub-carriers divided into a plurality of sets of sub-carriers, the apparatus comprising detection means for performing detection on each of said sets, the detection means comprising means for applying lattice reduction to said sub-carriers in said set thereby generating a reduced basis channel response.

13. An apparatus in accordance with claim 12 further comprising means for determining a single value channel response matrix from a set of channel response matrices.

14. An apparatus in accordance with claim 13, wherein said means for determining said single value channel response is operable to determine any one of:

    i. mean value of said channel response matrices, and;
    ii. median value of said channel response matrices.

15. An apparatus in accordance with any one of claims 12 to 14 further comprising means for processing said single value channel response matrix to generate a unitary matrix and a triangular matrix.

16. An apparatus in accordance with claim 15, wherein said processing means is operable to perform a QR decomposition of said single value channel response matrix.

17. A MIMO-OFDM wireless communications apparatus including a detector comprising apparatus in accordance with any one of claims 12 to 16.

18. A computer program product comprising computer executable instructions which, when executed on general purpose computer controlled communications apparatus, cause the apparatus to become configured to perform the method of any of claims 1 to 11.

19. A storage medium storing computer executable instructions which, when executed on general purpose computer controlled communications apparatus, cause the apparatus to become configured to perform the method of any of claims 1 to 11.

20. A signal carrying computer receivable information, the information defining computer executable instructions which, when executed on general purpose computer controlled communications apparatus, cause the apparatus to become configured to perform the method of any of claims 1 to 11.

EP 1 863 243 A1

Fig. 1

Fig. 2

Fig. 3

Begin

S2-2 — Obtain a set of
Channel Matrix

S2-4 — Determine $\bar{H}$ by
applying CSI processing

S2-6 — Apply QR
Decomposition

Permutation
Matrix, $P$

S2-10

S2-8 — Apply lattice
reduction algorithm

S2-12 — Compute reduced basis
for each sub-carrier

S2-14 — Apply QR decomposition for
reduced basis of each
sub-carrier

No ◁ QR outputs obtained for all
sub-carriers in this set?

S2-16

Yes

300

End

# Fig. 4

Begin

S3-2 — Obtain a set of Channel Matrix

S3-4 — Determine $\bar{H}$ by applying CSI processing

S3-6 — Apply QR Decomposition

S3-10 — Permutation Matrix, $P$

S3-8 — Apply lattice reduction algorithm

S3-12 — Compute reduced basis for each sub-carrier

S3-14 — Apply QR decomposition for reduced basis of each sub-carrier

S3-20 — Permutation Matrix, $\bar{T}$

S3-16 — Apply lattice reduction algorithm to each sub-carrier

S3-18 — QR outputs obtained for all sub-carriers in this set?

No

Yes

400

Begin

Fig. 5

Fig. 6

**European Patent Office**

**EUROPEAN SEARCH REPORT**

Application Number

EP 07 25 1555

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | BERENGUER I ET AL: "Lattice-reduction-aided receivers for MIMO-OFDM in spatial multiplexing systems" PERSONAL, INDOOR AND MOBILE RADIO COMMUNICATIONS, 2004. PIMRC 2004. 15TH IEEE INTERNATIONAL SYMPOSIUM ON BARCELONA, SPAIN 5-8 SEPT. 2004, PISCATAWAY, NJ, USA,IEEE, vol. 2, 5 September 2004 (2004-09-05), pages 1517-1521, XP010754080 ISBN: 0-7803-8523-3 * section III.C * | 1-20 | INV. H04L25/02 |
| Y | WO 2006/035704 A (MATSUSHITA ELECTRIC IND CO LTD [JP]; YUDA YASUAKI; IMAI TOMOHIRO; MIYO) 6 April 2006 (2006-04-06) * abstract * & EP 1 783 940 A (MATSUSHITA ELECTRIC IND CO LTD [JP]) 9 May 2007 (2007-05-09) * paragraphs [0037], [0038] * | 1-20 | |
| A | EP 1 617 568 A (MITSUBISHI ELECTRIC CORP [JP]) 18 January 2006 (2006-01-18) * paragraph [0061] * | 1-20 | TECHNICAL FIELDS SEARCHED (IPC) H04L |
| A | XIAOLI MA ET AL: "Lattice-Reduction Aided Linear Equalizer Design for Linear Complex-Field Coded OFDM Systems" MILITARY COMMUNICATIONS CONFERENCE, 2005. MILCOM 2005. IEEE ATLANTIC CITY, NJ, USA 17-20 OCT. 2005, PISCATAWAY, NJ, USA,IEEE, 17 October 2005 (2005-10-17), pages 1-7, XP010901366 ISBN: 0-7803-9393-7 * see section V " | 1-20 | |

-/--

The present search report has been drawn up for all claims

| Place of search | Date of completion of the search | Examiner |
|---|---|---|
| Munich | 24 September 2007 | AGUDO CORTADA, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 07 25 1555

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | WOBBEN D ET AL: "MMSE-based lattice-reduction for near-ML detection of MIMO systems" SMART ANTENNAS, 2004. ITG WORKSHOP ON MUNICH, GERMANY MARCH 18-19, 2004, PISCATAWAY, NJ, USA,IEEE, 18 March 2004 (2004-03-18), pages 106-113, XP010780087 ISBN: 0-7803-8327-3 * section III * | 1-20 | |

-----

|  | TECHNICAL FIELDS SEARCHED (IPC) |
|---|---|
|  |  |

The present search report has been drawn up for all claims

| Place of search | Date of completion of the search | Examiner |
|---|---|---|
| Munich | 24 September 2007 | AGUDO CORTADA, E |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

**ANNEX TO THE EUROPEAN SEARCH REPORT
ON EUROPEAN PATENT APPLICATION NO.**

EP 07 25 1555

This annex lists the patent family members relating to the patent documents cited in the above-mentioned European search report.
The members are as contained in the European Patent Office EDP file on
The European Patent Office is in no way liable for these particulars which are merely given for the purpose of information.

24-09-2007

| Patent document cited in search report | | Publication date | Patent family member(s) | | Publication date |
|---|---|---|---|---|---|
| WO 2006035704 | A | 06-04-2006 | EP<br>KR | 1783940 A1<br>20070072862 A | 09-05-2007<br>06-07-2007 |
| EP 1783940 | A | 09-05-2007 | WO<br>KR | 2006035704 A1<br>20070072862 A | 06-04-2006<br>06-07-2007 |
| EP 1617568 | A | 18-01-2006 | CN<br>WO<br>KR<br>US | 1768488 A<br>2004095730 A1<br>20050119143 A<br>2006258303 A1 | 03-05-2006<br>04-11-2004<br>20-12-2005<br>16-11-2006 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **H. YAO ; G.W. WOMELL.** Lattice-Reduction-Aided Detectors for MIMO Communication Systems. *Proc. IEEE Globecom,* November 2002, 424-428
- *Workshop on Smart Antennas,* July 2004, 106-113
- **C. WINDPASSINGER ; L.H.-J. LAMPE ; R.F.H. FISCHER.** From lattice-reduction-aided detection towards maximum-likelihood detection in MIMO systems. *Wireless and Optical Communications,* 2003
- **C. WINDPASSINGER ; R.F.H. FISCHER ; J.B. HUBER.** Lattice reduction aided pre-coding. *IEEE Transactions on Communications,* December 2004, vol. 52 (12), 2057-2060

- **I. BERENGUER ; J. ADEANE ; I. WASSELL ; X. WANG.** Lattice-Reduction-Aided Receivers for MIMO-OFDM in Spatial Multiplexing Systems. *Proc. Int. Symp. on Personal Indoor and Mobile Radio Communications,* September 2004, 1517-1521
- **J. ADEANE ; M.R.D. RODRIGUES ; I. BERENGUER ; I.J. WASSELL.** Improved detection methods for MIMO-OFDM-CDM communication systems. *Proc. IEEE Vehicular Technology Conference (VTC 2004),* September 2004, 1604-1608
- **A. LENSTRA ; H. LENSTRA ; L. LOVASZ.** Factoring Polynomials with Rational Coefficients. *Math Ann.,* 1982, vol. 261, 515-534